# EUROPEAN PATENT APPLICATION

(11) **EP 2 236 363 A2**
(43) Date of publication of application: **06.10.2010**
(21) Application number: 10157695.7
(22) Date of filing: 25.03.2010
(51) Int. Cl.: B60R 25/04, H04B 1/00

(54) **Vehicle Key Fob Having Audio File Storage**

(30) Priority: 01.04.2009 US 416304
(71) Applicant: Delphi Technologies, Inc., Troy, MI 48007 (US)
(72) Inventor: Thomas, Steven P., Westfield, IN 46074 (US); Bartel, David P., Carmel, IN 46032 (US)
(74) Representative: Denton, Michael John

(57) **Abstract**

A key fob (30) is provided that includes a housing, a key function operative with a vehicle ignition (16) for allowing operation of the vehicle (10), and a communication link (84) for allowing communication between the key fob (30) and the vehicle (10). The key fob (30) also includes memory (82) storing audio files (36). The audio files (36) may be downloaded or streamed to a vehicle (10) via the communication link (84). The memory (82) may further store saved audio file information, such as music identifiers, provided on board the vehicle (10) and downloaded to the key fob (30) upon initiation by a user.

## Description

### Technical Field

The present invention generally relates to vehicle keys or key fobs, and more particularly relates to vehicle fob and entertainment functionality integrated for use on board a vehicle.

### Background of the Invention

The operator of an automotive vehicle is also generally required to carry a vehicle key which typically is installed into or otherwise in communication with the vehicle ignition to operate the vehicle. The vehicle key may include a key fob integrated within the key housing or as a separate housing attached to the key. The key fob typically also allows the user to control remote passage entry of doors and trunk, remote start/stop functions, panic on/off alerts, intrusion alerts, close passenger door/windows and display static vehicle parameters remotely. The fob may be used to unlock a vehicle using "remote keyless entry" in which the user presses a button on the fob that causes one or more doors to unlock, or "passive entry" in which close proximity of the fob to the vehicle is automatically sensed, and then a vehicle door automatically unlocks when the user reaches out a hand to the door handle to open it. The vehicle fob is portable and may be easily transported on board and off board the vehicle.

Automotive vehicles also commonly employ car radios, including AM/FM radios and satellite radios such as XM® and Sirius® radio to provide audio entertainment and other information on board the vehicle. Users may select the appropriate channels to receive desired audio information, such as music. In addition, passengers bring music into the vehicle through other medium including compact discs (CDs), tapes, and more recently by way of iPods and universal serial bus (USB) memory sticks.

Quite often, a user of the vehicle brings the key fob and the portable music device on board the vehicle in order to operate the vehicle and play desired music. It is desirable to provide for vehicle electronics that may more effectively integrate vehicle functionality and provide for a more user friendly operation of the vehicle.

### Summary of the Invention

According to one aspect of the present invention, a vehicle key fob having audio file storage is provided. The key fob comprises a key fob housing, a battery disposed within the key fob housing, a key function operative with a vehicle ignition for allowing operation of the vehicle, a communication link allowing communication between the key fob and the vehicle and memory storing one or more audio files. The audio files are made available to the vehicle via the communication link.

According to another aspect of the present invention, a key fob having audio file information storage is provided. The key fob comprises a key fob housing and a key function operative with a vehicle ignition for allowing operation of the vehicle. The key fob also includes a communication link allowing communication between the key fob and the vehicle. The key fob further includes memory storing audio file information. The memory stores audio information available on board the vehicle at the request of a user by way of the communication link.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:

FIG. 1 is a schematic block diagram illustrating a key fob used on board a vehicle, according to one embodiment;

FIG. 2 is a schematic diagram of the key fob used in the vehicle, according to one embodiment;

FIG. 2A is an enlarged view of section II in FIG. 2 further illustrating the key fob removed from an ignition receptacle, according to one embodiment;

FIG. 3 is a block diagram illustrating electronics on board the vehicle associated with the radio and controls therefore, according to one embodiment;

FIG. 4 is a block diagram illustrating the electronics associated with the key fob, according to one embodiment;

FIG. 5 is a block diagram illustrating the key fob in communication with a home computer to acquire audio files; and

FIG. 6 is a flow diagram illustrating a routine for managing audio files to download music and save favorite audio information, according to one embodiment.

### Description of the Preferred Embodiment

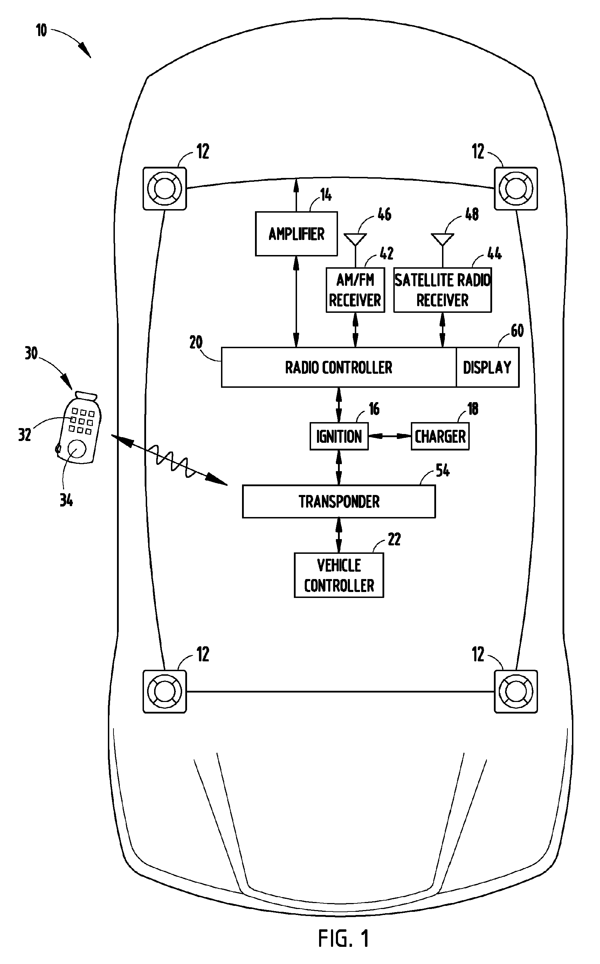

Referring now to FIG. 1, an automotive vehicle 10 is generally illustrated configured to operate and communicate with a key fob 30, as shown and described herein providing a key function without a shaped metallic key, according to one embodiment. The vehicle 10 may include an automotive vehicle having an internal combustion engine and road wheels, such as a passenger car or truck, according to one embodiment. It should be appreciated that the vehicle 10 may include other types of vehicles. Further, it should be appreciated that the key fob 30 may be used in applications other than for a vehicle.

The vehicle 10 is shown having an audio system in the form of a plurality of audio speakers 12 and an amplifier 14. The audio speakers 12 and amplifier 14 amplify and broadcast audio sound (e.g., music) made available to passengers within the passenger compartment of the vehicle 10. The vehicle 10 is also shown including audio sources for receiving audio information, such as music, which include an AM/FM receiver 42 and a satellite radio receiver 44. The AM/FM receiver 42 has an antenna 46 and may receive RF radio station signals. Similarly, the satellite radio receiver 44 has an antenna 48 and may receive satellite broadcast audio information such as that commercially available from Sirius® and XM® satellite services. The AM/FM receiver 42 and satellite radio receivers 44 provide received audio information that is processed in radio controller 20 and provided to the amplifier 14 for broadcast via speakers 12.
In addition, the vehicle 10 may be equipped to play other audio files, such as those found on CDs, tapes, iPods, USB memory sticks and other music devices.

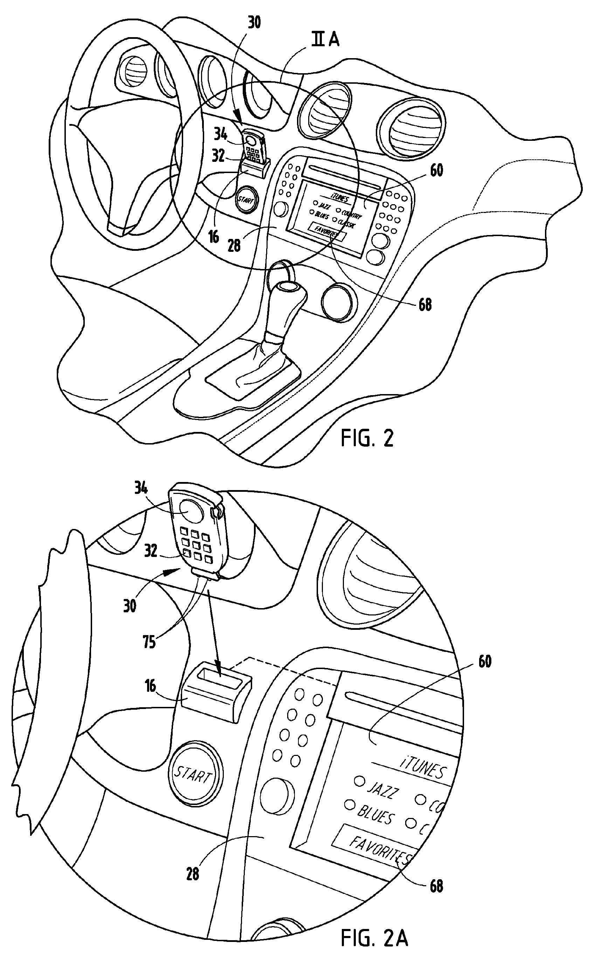

The vehicle 10 is shown also including an ignition 16 configured to receive the key fob 30 which includes a key function that allows the vehicle ignition 16 to operate the vehicle engine and further allows control of other vehicle functions. In one embodiment, the key function may be provided by a metal key having a keyed pattern and adapted to fit into an ignition switch in the vehicle 10, such that the vehicle 10 generally may be operated only if the key matches the ignition switch. According to another embodiment, the key function may include a keyless ignition device that plugs into the vehicle dash 28 or otherwise communicates wirelessly with the vehicle 10 and provides the key function that allows for operation of the vehicle 10. Additionally, it should be appreciated that the key fob 30 and key function may be integrally housed in a common housing or may be provided in separate housings which may be carried or connected together. The key fob 30 may engage the ignition in the steering column, according to one embodiment, or may otherwise engage an ignition slot in the dash 28 as shown in FIGs. 2 and 2A, or may otherwise be a wireless device that requires the vehicle driver to position the key fob 30 within the vehicle 10.

The vehicle 10 is also shown including a charger 18. The charger 18 may include an inductive charger having an inductive coil to charge a rechargeable battery located within the key fob 30. It should be appreciated that the rechargeable battery in the key fob 30 may also be charged by a direct wire connection provided through an ignition switch connection, according to another embodiment.

The vehicle 10 further includes the radio controller 20 which is shown coupled to a display 60. The radio controller 20 has control circuitry that may include a microcontroller that communicates with the receivers 42 and 44 to receive radio signals and to process the radio signals to produce audio outputs that are made available to the amplifier system 14 for broadcast on speakers 12. The radio controller 20 may also manage data presented on the display 60. The display 60 may be a reconfigurable display 60 for outputting data to the vehicle 10 and, according to one embodiment, includes a touch screen display and/or operator actuatable input buttons for inputting information to the radio controller 20 and other vehicle controls 20. The display 60 may include an input button 68 presented on the display 60, an input button 34 on the key fob 30 and/or may have one or more other inputs located in the vehicle 10 that allows a user, such as the driver of the vehicle 10, to save one or more audio file information such as identifiers for favorite songs, according to one embodiment.

The vehicle 10 is also shown having a vehicle controller 22. The vehicle controller 22 may include one or more controllers typically found on the vehicle 10 for controlling various systems and devices associated with the vehicle 10. A transponder 54 is also shown in communication with the vehicle controller 22. The vehicle transponder 54 communicates with a transponder in the key fob 30 to communicate various key fob function signals, such as vehicle door unlock, and provides the signals to the vehicle controller 22 for processing and execution of the fob inputs.

Referring to FIGs. 2 and 2A, the key fob 30 and the ignition 16 are illustrated, according to one embodiment. The ignition 16 is shown provided in the dashboard 28, generally forward of the driver of the vehicle 10, at a location that allows the driver to insert the key fob 30 into the ignition 16 and remove the key fob 30 from the ignition 16. The key fob 16 serves both as a vehicle key function to allow operation of the vehicle 10 and to provide key fob functionality, and also serves to provide audio file downloading to the vehicle 10 and to save audio file information while used in the vehicle 10. The ignition 16 may include electrical contacts for engaging contacts 75 on the key fob 30 so as to provide a wired communication link to communicate electrical signals therebetween. In one embodiment, the electrical contacts may provide a serial bus communication path to allow for the transmission of audio files, including music and audio file information including RDS song names. According to one embodiment, the key fob 30 is configured with a wireless communication link, such as Bluetooth® or Total 802.11® to communicate audio file signals between the key fob 30 and the vehicle 10. It should be appreciated that both the electrical contacts 75 on the key fob 30 and the wireless communication link may be provided within a given key fob and made available to a user.

The key fob 30 integrates the vehicle fob and key functions and audio file storage and management functions into a single portable device that is usable both on board the vehicle 10 and off the vehicle 10. For example, when used at home, the key fob 30 may interface with a computer to allow for the downloading of audio files, such as an audio playlist, to the key fob 30 which are stored in memory in the key fob 30 and then downloaded or streamed to the vehicle 10 when brought on board the vehicle 10. Additionally, the key fob 30 may store favorite audio file identifiers by storing RDS song names which then may be transferred to the home computer and used by the user to purchase the favorite songs from a source, such as iTunes, Amazon.com, or other audio file sources. Accordingly, a user may listen to music while operating the vehicle 10 and, upon listening to a favorite song, may initiate the downloading of the RDS song name to the key fob 30 and, when docked with the home computer, the key fob 30 may display the favorite song information to enable the user to purchase the saved favorite songs.

The key fob 30 is shown having a housing that generally contains and houses the key function and the controller, memory, and other components. The key fob 30 has a plurality of key fob buttons 32 that allow for conventional key fob functionality which includes any of remote/passive entry of vehicle doors and trunk, remote engine start/stop functions, push button start/stop functions, panic on/off functions, intrusion alert functions, display of static vehicle parameters remotely (e.g., door locks, tire pressure, fuel, etc.), and close window functions. Additionally, the key fob 30 is shown having a favorite button 34 which allows the user to depress button 34 to initiate the downloading of the RDS name of a song or other audio file being played on the radio on board the vehicle 10 to memory in the key fob 30.

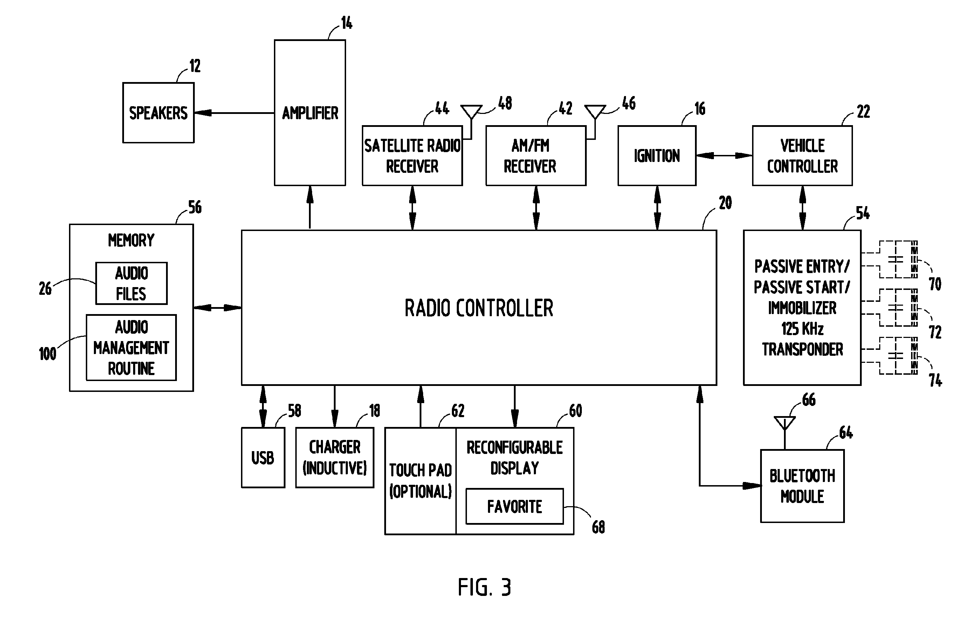

Various features installed on the vehicle 10 that may operate in conjunction with the key fob 30 are illustrated in FIG. 3, including the radio controller 20 and components associated therewith. The radio controller 20 essentially operates as microcontroller for controlling various radio and other entertainment and information functions on board the vehicle 10. According to one embodiment, the microcontroller 20 includes a microprocessor. The radio controller 20 is shown communicating with the various devices installed on board the vehicle 10 including the amplifier 14, the AM/FM receiver 42, and the satellite radio receiver 44.

The vehicle 10 also has the passive entry/passive start/immobilizer transponder 54. The transponder 54 is shown as a 125 kHz transponder, according to one embodiment. The transponder 54 provides close range (e.g., within one or two meters) communication between the vehicle 10 and the key fob 30. This may be achieved using close range antennas 70, 72 and 74 for providing signals that correspond to the respective passive entry, passive start and immobilizer functions. It should be appreciated that the vehicle 10 may further be equipped with another transceiver (not shown) that may operate to provide long distance, bidirectional communication to communicate with the key fob 30 so as to provide more long range remote keyless entry functions, such as a vehicle start function.

The radio controller 20 further communications with a Bluetooth® module 64 for providing wireless signal communication with various devices inside the vehicle 10, including the key fob 30. Bluetooth® is a generally short range wireless communication link. However, it should be appreciated that other short and long range wireless communication links may be employed.

The radio controller 20 further is shown coupled to a reconfigurable display 60 that allows for the visual display of information viewable to passengers in the vehicle 10. The reconfigurable display 60 may include a touchpad that allows user input of data and commands, including a favorite input 68 to allow for the saving of favorite song identifiers to initiate RDS song names to be saved to the key fob 30. The radio controller 20 further communicates with a universal serial bus (USB) 58 that allows data communication between the radio controller 20 and any USB compatible device, such as an MP3 player, an iPod, or other music player. The charger 18 is shown as part of or in close proximity to the ignition 16 and may employ an inductive charger coil that may be electrically coupled to a charging coil within the key fob 30 to provide inductive charging of the rechargeable battery powering the key fob 30.

The radio controller 20 is further shown coupled to memory 56. Memory 56 may include volatile or non-volatile memory including random access memory (RAM), electronically erasable programmable read-only memory (EEPROM), flash memory and other known memory storage mediums for storing data, audio files, and one or more routines. Memory 56 may store audio files 26 downloaded from the key fob 30. In addition, memory 56 stores an audio management routine 100 for managing the download of audio files from the key fob 30 to the vehicle 10 and for further managing the uploading of RDS song names from the vehicle 10 to the key fob 30 at the request of a user.

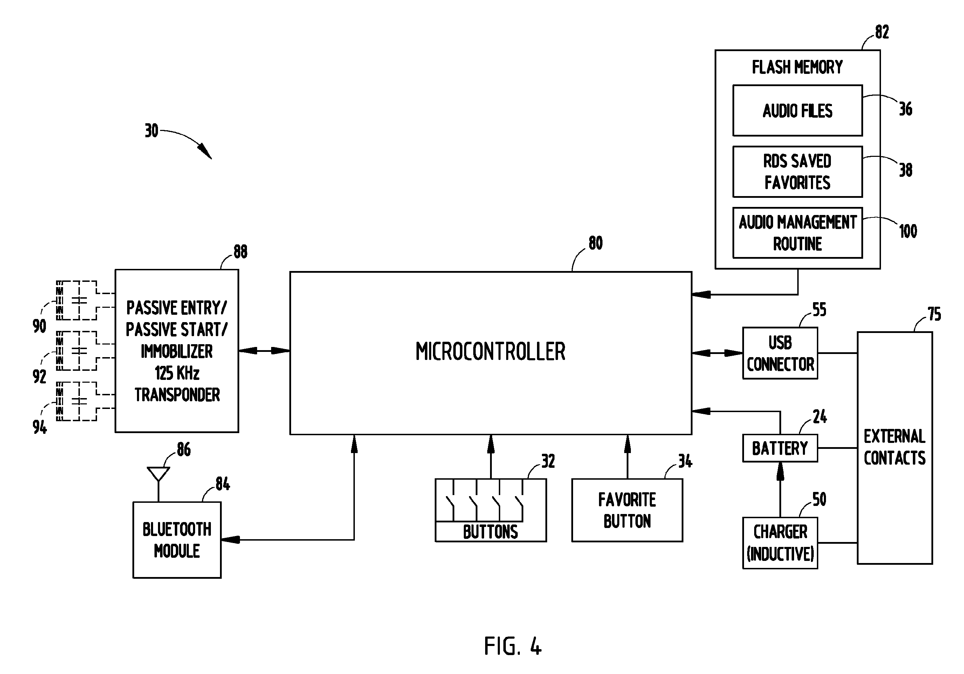

The key fob 30 is illustrated further in FIG. 4 having a microcontroller 80 coupled to the user actuatable favorite button 34 and fob input buttons 32. The user actuatable favorite button 34 allows a user to initiate the saving of RDS song name information for a song played on the vehicle radio to be stored in memory on the key fob 30. The key fob 30 also includes a passive entry/passive start/immobilizer transponder 88 shown as a 125 kHz transponder. The transponder 88 is shown having antennas 90, 92 and 94 for providing close by communication with the vehicle 10 to transmit the respective passive entry, passive start and immobilizer function signals to the transponder antennas 70, 72 and 74 on the vehicle 10. Accordingly, the transponder 88 enables the key fob 30 to provide vehicle fob functionality communicated to the vehicle 10. It should further be appreciated that the key fob 30 may also include another transceiver to provide longer range communication with the vehicle, such as for receiving long range key fob functions, such as a vehicle start signal.

Also provided in the key fob 30 is memory 82, which may include flash memory, according to one embodiment. According to other embodiments, the memory 82 may include random access memory (RAM), electronically erasable programmable read-only memory (EEPROM) or other known memory storage medium. Memory 82 may store audio files 36 that have been saved and are to be downloaded to the vehicle 10. In addition, memory 82 may store RDS saved favorites 38 which include saved song names that are saved at the request of a user so that a user listening to a song played on the car radio may save the song name in memory such that it is available at a later point in time for purchase from a music provider source. For example, a user may listen to a song on the radio in the vehicle 10 and may request that the name of the song be saved in memory 82 in key fob 30, and may later dock the key fob 30 with a computer at home, download saved song names and purchase the songs through a music provider source, such as iTunes. It should be appreciated that the audio files 36 may be downloaded to the vehicle 10 and that the RDS saved favorite identifiers 38 may be uploaded to the key fob 30 using a wireless communication, such as Bluetooth®, or using direct wire contacts.

The memory 82 is also shown including an audio management routine 100. Thus, both the key fob 30 and the vehicle are shown equipped with an audio management routine 100. However, it should be appreciated that the audio management routine 100 may be stored in memory 82 of the key fob 30 and/or the memory 56 of vehicle 10.

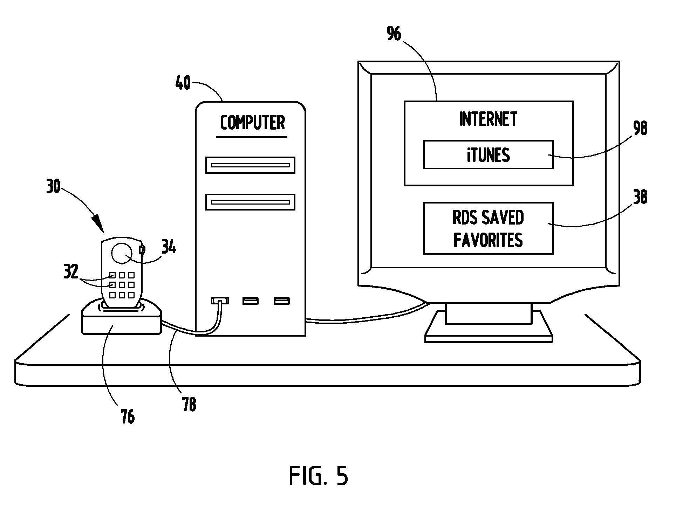

The key fob 30 is also shown having a USB connector 55 that allows for the interfacing with electrical contacts 75. Electrical contacts 75 may communicate with a home docking station connected to a computer as shown in FIG. 5. Additionally, electrical contacts 75 may connect with contacts provided in the ignition 16 of the vehicle 10 to provide a direct electrical wired communication link. The key fob 30 includes a rechargeable battery 24, which may be charged by charging circuitry 50, such as an inductive coil that communicates inductively with the charger 18 on board the vehicle 10.

Referring to FIG. 5, the key fob 30 is shown installed onto a docking station 76 which, in turn, is connected to a computer 40 via a USB connector 78. The computer 40 may include a home computer having Internet access. Once docked on the docking station 76, the key fob 30 may download the saved favorite name songs to the computer 40 which then may be presented on a display as shown by block 38. A user may then purchase or otherwise acquire the music through the Internet 96 from a music provider, such as iTunes 98.

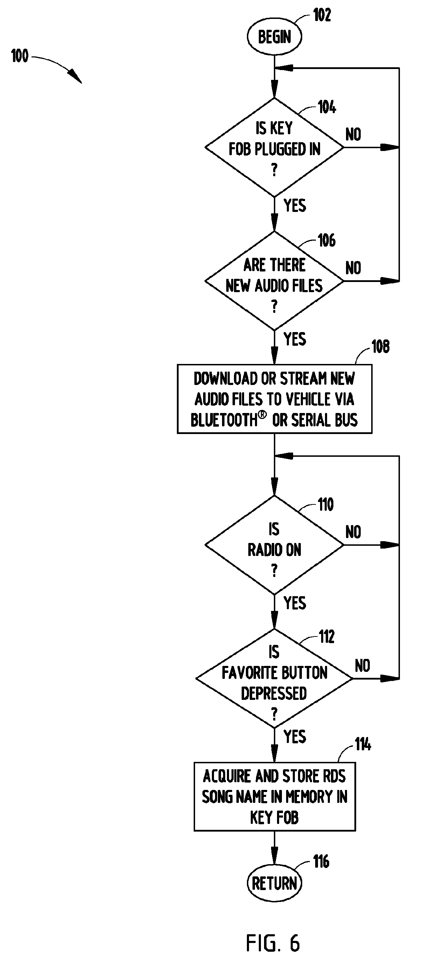

Referring to FIG. 6, the audio management routine 100 is illustrated, according to one embodiment. Routine 100 begins at step 102 and proceeds to decision step 104 to determine if the key fob is plugged in or otherwise operatively coupled to the vehicle. If not, decision step 104 is repeated. If the key fob is determined to be plugged in or otherwise coupled to the vehicle, routine 100 proceeds to decision step 106 to determine if there are new audio files present and, if not, returns to step 104. If new audio files are present, routine 100 proceeds to download or stream the new audio files to the vehicle via a wireless communication link, such as Bluetooth® or via a wired connection such as a serial bus.

Routine 100 then proceeds to decision step 110 to determine if the radio is turned on and, if not, waits for the radio to be turned on. If the radio is turned on, routine 100 proceeds to decision step 112 to determine if the favorite button has been depressed and, if not, returns to step 110. When the favorite button is depressed, routine 100 proceeds to step 114 to acquire and store RDS song name for the song currently being played in memory in the key fob and then returns at step 116. Accordingly, routine 100 advantageously downloads or streams audio files to the vehicle from the key fob and uploads RDS song name information from the vehicle to the key fob for songs played in the vehicle upon the request of a user.

In addition, when a song or music is being streamed and thus played from the key fob 30, and the user stops playing the music because the vehicle 10 is turned off or the radio is turned off or another audio source is selected, the track and time pointer may be written to the key fob memory so that when the music begins playing again, the song can continue where it left off. This advantageously allows the user to begin playing the music at the location where it left off, regardless of the location of use of the key fob 30. The user may bring the key fob 30 into the home docking station and play the music in the home, by starting at the location that the music was last playing. This advantageously allows the music to move and seamlessly continue playing for a given user.

The key fob advantageously allows for the management of audio files for use on board a vehicle in conjunction with the key fob and its key function of the vehicle. This advantageously allows for the integration of products within the vehicle such that the user may provide a single device on board the vehicle to operate as the ignition key function and to provide downloaded music and acquire RDS song name information in a manner that is efficient and effective.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A key fob (30) having audio file storage, said key fob comprising:
a key fob housing;
a key function operative with a vehicle ignition (16) for allowing operation of a vehicle (10);
a communication link (84) allowing communication between the key fob (30) and the vehicle (10); and
memory (82) storing one or more audio files (36), wherein the audio files (36) are made available to the vehicle (10) via the communication link (84), and/or
memory (82) storing audio file information, wherein the memory (82) stores audio file information (38) available on board the vehicle (10) at the request of a user by way of the communication link (84)..

2. The key fob as defined in claim 1, wherein the one or more audio files (36) are downloaded to the vehicle (10) via the communication link (84).

3. The key fob as defined in claim 1, wherein the saved audio file information comprises radio data system information (38).

4. The key fob as defined in claim 3, wherein the radio data system information comprises one or more music identifiers (38).

5. The key fob as defined in any one of claims 1 to 4 further comprising a user input (34) for allowing initiation of audio file information (38) to be transmitted from the vehicle (10) and stored in memory (82) in the key fob (30).

6. The key fob as defined in any one of claims 1 to 5, wherein the key fob (30) further comprises a rechargeable battery (24) disposed within the fob housing and charging circuitry (50) adapted to couple to a charger (18) in the vehicle (10).

7. The key fob as defined in claim 6, wherein the charger (18) comprises an inductive charger.

8. The key fob as defined in any one of claims 1 to 7, wherein the key function is provided in the fob housing with the memory (82).

9. The key fob as defined in any one of claims 1 to 8, wherein the key fob (30) comprises control circuitry (80) for controlling the storage and communication of audio files (36).

10. The key fob as defined in any one of claims 1 to 9, wherein the communication link comprises a wireless communication link (84).

11. The key fob as defined in any one of claims 1 to 10, wherein the stored audio file information (38) may be downloaded to a computer (40) to enable audio files to be acquired.
